# EUROPÄISCHE PATENTANMELDUNG

(11) **EP 3 581 683 A1**
(43) Veröffentlichungstag der Anmeldung: **18.12.2019**
(21) Anmeldenummer: 18178030.5
(22) Anmeldetag: 15.06.2018
(51) Int. Cl.: C25B 15/08, C25B 1/10, C25B 9/08

(54) **ELEKTROLYSEVORRICHTUNG MIT EINEM REKOMBINATOR UND VERFAHREN ZUM BETREIBEN DER ELEKTROLYSEVORRICHTUNG**

(71) Anmelder: Siemens Aktiengesellschaft, 80333 München (DE)
(72) Erfinder: Wolf, Erik, 91341 Röttenbach (DE); Reiner, Andreas, 91083 Baiersdorf (DE)

(57) **Zusammenfassung**

Die Erfindung betrifft eine Elektrolysevorrichtung mit einem Rekombinator und ein Verfahren zum Betreiben der Elektrolysevorrichtung. Die Elektrolysevorrichtung umfasst wenigstens eine Elektrolysezelle zum Spalten von Wasser zu einem ersten Produkt umfassend wenigstens 98 Vol% Wasserstoff und zu einem zweiten Produkt umfassend wenigstens 98 Vol% Sauerstoff. Die Elektrolysevorrichtung umfasst weiterhin wenigstens einen ersten passiven Rekombinator umfassend einen Katalysator zum Entfernen von Sauerstoff aus dem ersten Produkt und/oder wenigstens einen zweiten passiven Rekombinator umfassend einen Katalysator zum Entfernen von Wasserstoff aus dem zweiten Produkt, wobei der Rekombinator bei Temperaturen von maximal 60°C betreibbar ist.

## Beschreibung

Die Erfindung betrifft eine Elektrolysevorrichtung mit einem Rekombinator mit wenigstens einer Elektrolysezelle und ein Verfahren zum Betreiben der Elektrolysezelle.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert.

Aktuelle Überlegungen gehen dahin, mit überschüssiger Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasser - Elektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach wird der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom Elektrolyseur erzeugte Wasserstoff auch unmittelbar weiterverwendet werden, beispielsweise für eine Brennstoffzelle. Für die genannte Verwendung des Wasserstoffs in einem Sabatierprozess oder in Brennstoffzellen muss der Wasserstoff eine ausreichende Reinheit von wenigstens 99 Vol% aufweisen. Auch für den entstehenden Wasserstoff sind für die weitere Verwendung, insbesondere mit Hydrierreaktionen mit Wasserstoff als Edukt ausreichende Reinheiten von wenigstens 99 Vol% erforderlich.

Derzeit werden standardmäßig katalysatorbasierte Systeme, sogenannte DeOxo- oder DeHydro-Katalysatoren eingesetzt. Damit diese ausreichend Effizient arbeiten, wird der Produktstrom aus der Elektrolysezelle auf Temperaturen oberhalb von 200 °C aufgeheizt. Nach der Gasaufbereitung wird der Produktgasstrom anschließend wieder abgekühlt. Dieses Verfahren verbraucht nachteilig eine große Menge Energie, was die Effizienz des gesamten Elektrolyseprozesses verschlechtert.

Es ist daher Aufgabe der Erfindung eine Elektrolysevorrichtung und ein Verfahren zum Betreiben einer Elektrolysevorrichtung anzugeben, welches gereinigte Produktgase bei verbesserter Effizienz des Gesamtprozesses bereitstellt.

Die Aufgabe wird mit einer Elektrolysevorrichtung gemäß Anspruch 1 und einem Verfahren zum Betreiben einer Elektrolysevorrichtung gemäß Anspruch 8 gelöst.

Die erfindungsgemäße Elektrolysevorrichtung umfasst wenigstens eine Elektrolysezelle zum Spalten von Wasser zu einem ersten Produkt umfassend wenigstens 98 Volumenprozent Wasserstoff und zu einem zweiten Produkt umfassend wenigstens 98 Volumenprozent Sauerstoff. Die Elektrolysevorrichtung umfasst weiterhin wenigstens einen ersten Rekombinator zum Entfernen von Sauerstoff aus dem ersten Produkt und/oder wenigstens einen zweiten Rekombinator zum Entfernen von Wasserstoff aus dem zweiten Produkt.

Das erfindungsgemäße Verfahren zum Betreiben einer Elektrolysevorrichtung umfasst zunächst das Bereitstellen einer Elektrolysevorrichtung. Die Elektrolysevorrichtung umfasst wenigstens eine Elektrolysezelle zum Spalten von Wasser zu einem ersten Produkt umfassend wenigstens 98 Volumenprozent Wasserstoff und zu einem zweiten Produkt umfassend wenigstens 98 Volumenprozent Sauerstoff. Weiterhin umfasst die Elektrolysevorrichtung wenigstens einen ersten Rekombinator zum Entfernen von Sauerstoff aus dem ersten Produkt und/oder wenigstens einen zweiten Rekombinator zum Entfernen von Wasserstoff aus dem zweiten Produkt, wobei der Rekombinator bei einer Temperatur von maximal 60 °C betrieben wird.

Der erste und/oder zweite Rekombinator umfasst einen Katalysator. Der Katalysator ist dabei typischerweise auf einem Tragelement angeordnet oder als ein Tragelement ausgebildet. Diese katalytischen Rekombinatoren funktionieren nach einer passiven Betriebsweise. Dabei betrifft diese Passivität sowohl das selbstständige Starten der Reaktion als auch den Betrieb ohne eine externe Energiezufuhr. Der Wasserstoffabbau bzw. der Sauerstoffabbau erfolgt bereits bei Wasserstoffkonzentrationen bzw. Sauerstoffkonzentrationen von 1 Volumenprozent, insbesondere auch von 2 Volumenprozent. Vorteilhaft arbeiten diese Rekombinatoren bei Temperaturen von maximal 60 °C.

Dadurch wird vorteilhaft vermieden, die Produktströme des Elektrolyseurs auf Temperaturen von 200 °C aufzuheizen, um sie dann zu reinigen und anschließend wieder abkühlen zu müssen. Vorteilhaft verringert das erfindungsgemäße Verfahren und die erfindungsgemäße Vorrichtung somit den Energiebedarf der Elektrolysevorrichtung. Dies erhöht die Effizienz und somit auch den Wirkungsgrad der gesamten Elektrolysevorrichtung vorteilhaft.

In einer vorteilhaften Ausgestaltung und Weiterbildung der Erfindung ist der erste und/oder zweite Rekombinator bei Umgebungstemperatur betreibbar.

In einer weiteren vorteilhaften Ausgestaltung und Weiterbildung der Erfindung ist die Elektrolysezelle bei einem Druck in einem Bereich von 1 bar bis 7 bar betreibbar. Besonders bei einem Betrieb bei Umgebungsdruck kann vorteilhaft das erste und/oder zweite Produktgas direkt in den ersten und/oder zweiten Rekombinator geführt werden.

In einer weiteren vorteilhaften Ausgestaltung und Weiterbildung der Erfindung umfasst der Katalysator Platin oder Palladium. Diese Katalysatoren eignen sich besonders vorteilhaft Wasserstoff zu Wasser oder Sauerstoff zu Wasser umzusetzen. Besonders vorteilhaft ist der Katalysator als Schicht auf einem Trägermaterial aufgebracht. Besonders vorteilhaft umfasst das Trägermaterial eine Keramik oder Glas. Die Keramik und das Glas sind vorteilhaft auch bei höheren Temperaturen, welche durch die exotherme Reaktion während der Rekombination entstehen können, stabil. Weiterhin sollte das Trägermaterial vorteilhaft porös und korrosionsbeständig sein. Vorteilhaft kann der Katalysator als Pelletschüttung in dem Rekombinator vorliegen.

In einer vorteilhaften Ausgestaltung und Weiterbildung der Erfindung werden der erste und/oder zweite Rekombinator bei einer Temperatur von maximal 35 °C betrieben, besonders bevorzugt bei einer Temperatur von maximal 25 °C. Vorteilhaft muss der Rekombinator somit nicht aktiv gekühlt oder geheizt werden. Der Energiebedarf der Reinigung ist somit vorteilhaft sehr niedrig, was die Effizienz der Elektrolysevorrichtung erhöht.

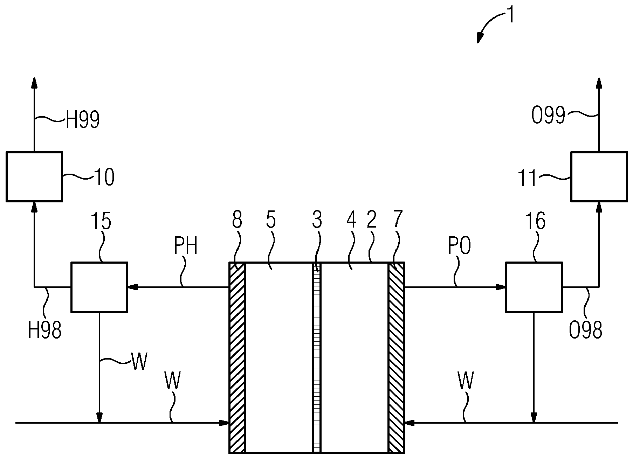

Weitere Merkmale, Eigenschaften und Vorteile der vorliegenden Erfindung ergeben sich aus der nachfolgenden Beschreibung unter Bezugnahme auf die beiliegende Figur. Die Figur 1 zeigt schematisch:
Eine Elektrolysevorrichtung mit einem ersten und einem zweiten Rekombinator.

Die Figur zeigt eine Elektrolysevorrichtung 1 zur Elektrolyse von Wasser. Die Elektrolysevorrichtung 1 umfasst wenigstens eine Elektrolysezelle 2. Die Elektrolysezelle 2 umfasst einen Anodenraum 4 mit einer Anode 7. Sie umfasst weiterhin einen Kathodenraum 5 mit einer Kathode 8. Der Anodenraum 4 ist vom Kathodenraum 5 mittels einer Protonenaustauschmembran 3 (englisch: Proton-Exchange-Membrane) getrennt. Der Anodenraum 4 ist geeignet, Wasser W aufzunehmen und an der Anode 7 zu einem zweiten Produkt PO umfassend Sauerstoff zu oxidieren. Der Kathodenraum 5 ist geeignet, Wasser W aufzunehmen und an der Kathode 8 zu einem ersten Produkt PH umfassend Wasserstoff zu reduzieren. In diesem Beispiel erfolgt das Zerlegen von Wasser W bei einem Druck von 5 bar. Alternativ ist es ebenso möglich, die Elektrolyse bei einem geringeren Druck, insbesondere bei atmosphärischem Druck, zu betreiben.

Das erste Produkt PH umfassend Wasserstoff und nicht umgesetztes Wasser verlässt den Kathodenraum 5. Es wird anschließend in eine erste Gasabscheidevorrichtung 15 geführt, in der der Wasserstoff von dem Wasser getrennt wird. Das Wasser wird in diesem Beispiel zurück in die Elektrolysezelle 2 geführt. Es kann ebenso aus dem Elektrolyseprozess herausgeführt werden. Das erste Produkt wird als Wasserstoff mit einer Reinheit von 98 % H98 in einen ersten Rekombinator 10 geführt. In dem ersten Rekombinator 10 wird die Reinheit des Wasserstoffs auf wenigstens 99 % erhöht.

Das zweite Produkt PO umfasst Sauerstoff und nicht umgesetztes Wasser. Das zweite Produkt PO wird in eine zweite Gasabscheidevorrichtung 16 geführt, wo der Sauerstoff von dem Wasser W getrennt wird. Das Wasser W kann zurück in die Elektrolysezelle 2geführt werden. Es ist ebenso denkbar, das Wasser aus dem Prozess zu entfernen. Der Sauerstoff O98 wird mit einer Reinheit von 98 % in den zweiten Rekombinator 11 geführt. Dort wird der Sauerstoff bis zu einer Reinheit von wenigstens 99 % gereinigt.

Der erste und zweite Rekombinator 10, 11 umfassen einen Katalysator, wobei der Katalysator ein Platinmaterial aufweist. Das Platinmaterial ist typischerweise auf ein poröses Material, welches insbesondere Keramik basierte Materialien oder glasbasierte Materialien umfasst, aufgebracht. Das poröse Material kann insbesondere auch in Form von Netzen ausgebildet sein. Als ein Trägermaterial wird insbesondere ein poröses hitzebeständiges und korrosionsbeständiges Material verwendet.

### Bezugszeichenliste

- 1: Elektrolysevorrichtung
- 2: Elektrolysezelle
- 3: Protonen-Austausch-Membran
- 4: Anodenraum
- 5: Kathodenraum
- 7: Anode
- 8: Kathode
- 10: erster Rekombinator
- 11: zweiter Rekombinator
- 15: erster Gasabscheider
- 16: zweiter Gasabscheider
- W: Wasser
- PO: zweites Produkt
- PH: erstes Produkt

## Patentansprüche

1. Elektrolysevorrichtung (1) umfassend:
- wenigstens eine Elektrolysezelle (2) zum Spalten von Wasser (W) zu einem ersten Produkt (PH) umfassend wenigstens 98 Vol% Wasserstoff und zu einem zweiten Produkt (PO) umfassend wenigstens 98 Vol% Sauerstoff,
- wenigstens einen ersten passiven Rekombinator (10) umfassend einen Katalysator zum Entfernen von Sauerstoff aus dem ersten Produkt (PH) und/oder wenigstens einen zweiten passiven Rekombinator (11) umfassend einen Katalysator zum Entfernen von Wasserstoff aus dem zweiten Produkt (PO), wobei wenigstens der erste und/oder der zweite (1) Rekombinator (10, 11) bei Temperaturen von maximal 60°C betreibbar ist.

2. Elektrolysevorrichtung (1) nach Anspruch 1, wobei der erste und/oder zweite Rekombinator (10, 11) bei Umgebungstemperatur betreibbar ist.

3. Elektrolysevorrichtung (1) nach einem der vorhergehenden Ansprüche, wobei die Elektrolysezelle (2) bei einem Druck in einem Bereich von 1 bar bis 7 bar betreibbar ist.

4. Elektrolysevorrichtung (1) nach einem der vorhergehenden Ansprüche, wobei der Katalysator Platin oder Palladium umfasst.

5. Elektrolysevorrichtung (1) nach Anspruch 4, wobei der Katalysator als Schicht auf einem Trägermaterial aufgebracht ist.

6. Elektrolysevorrichtung (1) nach Anspruch 5, wobei das Trägermaterial eine Keramik umfasst.

7. Elektrolysevorrichtung (1) nach Anspruch 4, wobei der Katalysator als Pelletschüttung in dem Rekombinator (10, 11) vorliegt.

8. Verfahren zum Betreiben einer Elektrolysevorrichtung (1) mit folgenden Schritten:
- Bereitstellen einer Elektrolysevorrichtung (1) umfassend wenigstens eine Elektrolysezelle (2) zum Spalten von Wasser (W) zu einem ersten Produkt (PH) umfassend wenigstens 98 Vol% Wasserstoff und zu einem zweiten Produkt (PO) umfassend wenigstens 98 Vol% Sauerstoff und wenigstens einen ersten Rekombinator (10) zum Entfernen von Sauerstoff aus dem ersten Produkt (PH) und/oder wenigstens einen zweiten Rekombinator (11) zum Entfernen von Wasserstoff aus dem zweiten Produkt (PO), wobei wenigstens der erste und/oder der zweite (1) Rekombinator (10, 11) bei einer Temperaturen von maximal 60°C betrieben wird.

9. Verfahren nach Anspruch 8, wobei der erste und/oder der zweite Rekombinator (10, 11) bei einer Temperatur von maximal 35 °C betrieben wird.

10. Verfahren nach Anspruch 8 oder 9, wobei der erste und/oder der zweite Rekombinator bei einer Temperatur von maximal 25 °C betrieben wird.
